# EUROPÄISCHE PATENTSCHRIFT

(11) **EP 2 541 098 B1**
(45) Veröffentlichungstag und Bekanntmachung des Hinweises auf die Patenterteilung: **14.05.2014**
(21) Anmeldenummer: 12174151.6
(22) Anmeldetag: 28.06.2012
(51) Int. Cl.: F16H 25/12, F16H 19/04

(54) **Getriebe und Verwendung eines solchen Getriebes**
Gearbox and use of such a gearbox
Engrenage et utilisation d'un tel engrenage

(30) Priorität: 01.07.2011 DE 102011051514
(43) Veröffentlichungstag der Anmeldung: 02.01.2013
(73) Patentinhaber: Wittenstein AG, 97999 Igersheim (DE)
(72) Erfinder: Schreiber, Heiko, 02692 Gnaschwitz (DE)
(74) Vertreter: Zimmermann & Partner

(56) Entgegenhaltungen:
- DE-A1-102006 042 786
- GB-A- 153 982

## Beschreibung

### Gebiet der Erfindung

Die Erfindung betrifft ein Getriebe zum Umsetzen einer Rotationsbewegung um eine Längsachse des Getriebes in eine Linearbewegung in Richtung der Längsachse nach dem Anspruch 1 sowie die Verwendung eines solchen Getriebes.

### Stand der Technik

Aus dem Stand der Technik sind verschiedene Getriebe bekannt, mit welchen sich Rotationsbewegungen in Linearbewegungen umsetzen lassen. Solche Getriebe sind für Anwendungen interessant, bei welchen die Drehbewegung eines Antriebs wie beispielsweise eines Elektro- oder Hydraulikmotors, in eine Linearbewegung umgesetzt werden soll. Dabei existieren verschiedene Bauformen, um möglichst große Kräfte in Linearrichtung zu erzeugen.

Ein Getriebe zum Umsetzen einer Rotationsbewegung in eine Linearbewegung, welches aus dem Stand der Technik bekannt ist, ist das Rollenspindelgetriebe. Eine Ausführungsform eines solchen Rollenspindelgetriebes zeigt die DE 195 16 199 A1. Bei Rollenspindelgetrieben werden Rollen, welche um eine in der Mitte angeordnete Spindel herum angeordnet sind, in eine Drehbewegung relativ zu der Spindel versetzt. Dies kann durch Drehen der Rollen um die Mittenachse des Getriebes oder durch Drehen der Spindel erfolgen. Die Rollen stützen sich außerdem an einer Mutter ab. Wird nun bei Rollenspindelgetrieben die Spindel angetrieben, so erfolgt eine Längsbewegung der Spindel relativ zu der Mutter.

In Bezug auf die Übertragung von großen Kräften in Längsrichtung, wie sie allgemein bei Rollenspindelgetrieben angestrebt wird, ist die Lagerung des sich drehenden, eine Linearkraft übertragenden Teils, beispielsweise die Lagerung der Spindel problematisch. Der Grund ist, dass die Lager für die Drehbewegung auch die Linearkraft aufnehmen müssen. Dies macht die Lagerung aufwendig und begrenzt die in Linearrichtung übertragbaren Kräfte.

Weiterhin sind aus dem Stand der Technik Wälzringspindelgetriebe bekannt, beispielsweise aus der EP 0 122 596 B1. Die EP 0 122 596 B1 zeigt eine Möglichkeit, wie mit einer Antriebsspindel und einem in die Gewindenute der Antriebsspindel eingreifenden Wälzring ein Lineargetriebe geschaffen werden kann. Allerdings hat auch dieses Getriebe die grundlegende Eigenschaft, dass eine Linearkraft von einem sich drehenden Bauteil abgegriffen werden muss, beispielsweise von der sich drehenden Spindel. Weiterhin müssen auch die Wälzringe drehbar gelagert sein, sodass eine Abstützung von Linearkräften über Drehlager erforderlich ist. Dies begrenzt wiederum die übertragbaren Kräfte und macht die Lagerung teuer und aufwendig.

Aus der GB 153,982, die als nächstliegender Stand der Technik gegenüber den Ansprüchen 1 und 14 erachtet wird, ist ein Getriebe zum Umsetzen von Rotationsbewegung und Translationsbewegung oder umgekehrt bekannt, welches Bolzen umfasst, die über konzentrisch angeordnete Kreisscheiben angetrieben werden. Die Bolzen interagieren mit einer Verzahnung. Die Verzahnung ist wiederum Teil einer Hülse, welche mit einer Stange mit Schraubenverzahnung in Eingriff steht. Die Hülse ist über ein Drehlager gegenüber dem Zahnträger drehbar gelagert.

### Offenbarung der Erfindung

Aufgabe der Erfindung ist ein verbessertes Getriebe zum Umsetzen einer Rotationsbewegung in eine Linearbewegung oder umgekehrt anzugeben, wobei insbesondere eine große in Linearrichtung übertragbare Kraft bei kleinem Bauraum erreicht werden soll oder insbesondere eine Aufnahme der Vorschubkraft in Linearrichtung durch Drehlager überflüssig werden soll.

Die Aufgabe wird mit einem Getriebe nach Anspruch 1 und einer Verwendung eines solchen Getriebes nach dem nebengeordneten Anspruch 14 gelöst.

Erfindungsgemäß wird ein Getriebe bereitgestellt, welches eine Stange mit einer Verzahnung und einen Zahnträger umfasst, in welchem Zähne für einen Eingriff mit der Verzahnung radial beweglich aufgenommen sind. Die Stange und der Zahnträger sind relativ zueinander drehfest gelagert. Außerdem sind die Stange und der Zahnträger relativ zueinander linear verschieblich gelagert. Das Getriebe eignet sich zum Umsetzen einer Rotationsbewegung um eine Längsachse des Getriebes in eine Linearbewegung in Richtung der Längsachse.

Vorzugsweise umfasst das Getriebe eine Antriebseinrichtung zum radialen Antrieb der Zähne. Hierbei ist von dem Begriff "Antriebseinrichtung" auch umfasst, dass das Getriebe in umgekehrter Richtung betrieben wird, wobei die Antriebseinrichtung durch die radial beweglichen Zähne angetrieben wird. In diesem Fall wird die "Antriebseinrichtung" für einen Rotationsabtrieb genutzt. Bei typischen Ausführungsformen treibt die Antriebseinrichtung die Zähne zumindest oder ausschließlich radial an. Der Antrieb erfolgt vorzugsweise ausschließlich radial nach innen oder ausschließlich radial nach außen. Bei einem Antrieb der Zähne ausschließlich nach radial innen werden die Zähne durch die Verzahnung der Stange und die Bewegung der Stange relativ zu dem Zahnträger wieder radial nach außen getrieben, sobald die Antriebseinrichtung dies zulässt. Analog geschieht dies bei einem ausschließlichen Antrieb nach radial außen.

Die Antriebseinrichtung umfasst vorzugsweise zumindest eine Kurvenscheibe, welche typischerweise eine, zwei, drei oder vier oder mehr Erhebungen oder Nocken aufweist. Die Kurvenscheibe ist typischerweise um die Längsachse des Getriebes rotativ gelagert und stellt damit das Abtriebs- oder Antriebselement für die Rotationsbewegung dar. Die Antriebseinrichtung oder die Kurvenscheibe ist relativ zum Zahnträger oder zur Stange rotativ beweglich, wohingegen die Stange und der Zahnträger relativ zueinander drehfest sind. Ausführungsformen, bei welchen Stange oder Zahnträger mit gesperrten Rotationsfreiheitsgrad gelagert sind, bieten besondere Vorteile, da die Elemente zur Übertragung der Linearkraft kein Drehlager aufweisen.

Der Zahnträger und die Stange sind typischerweise konzentrisch angeordnet, dies ergibt einen kompakten Aufbau. Bei Ausführungsformen der Erfindung ist der Zahnträger mehrteilig ausgeführt, insbesondere in Längsachse in mehrere längliche Abschnitte unterteilt. Ein umlaufend durchgängiger Zahnträger bietet den Vorteil einer hohen Stabilität. Die Zähne sind in dem Zahnträger vorzugsweise radial bezüglich der Längsachse beweglich angeordnet, beispielsweise indem die Zähne in entsprechende Öffnungen des Zahnträgers eingesteckt sind. Der Zahnträger umfasst vorzugsweise zumindest teilweise radial ausgerichtete Öffnungen zur Aufnahme der Zähne. Die Öffnungen sind typischerweise in radialer Richtung durchgehend. So wird ermöglicht, dass auf der einen Seite des Zahnträgers der Zahnkopf herausstehen kann und auf der anderen Seite das untere Zahnende für das Zusammenwirken mit der Antriebseinrichtung herausstehen kann.

Vorzugsweise ist die Kurvenscheibe konzentrisch zur Stange oder zum Zahnträger angeordnet, dies ergibt wiederum einen besonders kompakten Aufbau. Vorzugsweise sind die Zähne in dem Zahnträger umlaufend auf einem Kreis angeordnet. Der Kreis ist vorzugsweise in einer Ebene senkrecht zur Längsachse. Weitere Ausführungsformen umfassen Zähne, welche mit einer Steigung in dem Zahnträger angeordnet sind.

Typische Ausführungsformen umfassen eine Mehrzahl von Zahnkreisen, welche in dem Zahnträger angeordnet sind. Dies erhöht die Belastbarkeit. Vorzugsweise sind die Zahnkreise parallel entlang der Längsrichtung angeordnet. Ein Zahnkreis umfasst typischerweise mindestens 4, bevorzugter mindestens 8 oder 12 in Umlaufrichtung nebeneinander angeordnete Zähne. Die Zähne sind typischerweise über den Umfang gleichverteilt angeordnet. So wird eine ideale Kraftaufteilung erreicht und Totpunkte vermieden. Die Mehrzahl von Zahnkreisen, welche jeweils mehrere Zähne umfassen, werden typischerweise durch eine oder mehrere Kurvenscheiben angetrieben. Ein Antrieb mit einer Kurvenscheibe bietet einen einfachen Aufbau, ein Antrieb mit mehreren Kurvenscheiben erlaubt einen Versatz des Eingriffs, beispielsweise um eine Steifigkeit des Getriebes zu erhöhen. Vorteilhafte Ausführungsformen umfassen zumindest zwei Kurvenscheiben. Die Maxima mehrerer Kurvenscheiben sind vorzugsweise zumindest im wesentlichen gleichmäßig über den Umfang des Zahnträgers verteilt. Vorzugsweise sind benachbarte Kurvenscheiben so angeordnet, dass deren Maxima zueinander um zumindest 30° gegeneinander verdreht sind. Auch kleinere oder größere relative Verdrehungen sind bei Ausführungsformen möglich, beispielsweise im Bereich 5°-90°.

Typischerweise greift die Antriebseinrichtung die Zähne so an und ist die Verzahnung derart ausgebildet, dass bei einer Drehung der Antriebseinrichtung oder einer oder mehrerer Kurvenscheiben als Antriebseinrichtung die Stange gegenüber den Zähnen mit dem Zahnträger linear verschoben wird. Dies trifft auch auf den umgekehrten Fall zu, bei welchem der Betrieb des Getriebes derart erfolgt, dass eine Längsverschiebung, das heißt eine Verschiebung der Stange relativ zu dem Zahnträger in Längsrichtung in eine Drehbewegung der Antriebseinrichtung umgesetzt wird. Vorzugsweise sind die Zähne in Umfangsrichtung bezüglich der Stange oder des Zahnträgers fest, das heißt, dass sie sich nicht um die Längsachse des Getriebes drehen. Bei typischen Ausführungsformen sind die Zähne derart in dem Zahnträger angeordnet, dass sie sich um ihre Zahnlängsachse drehen können. Bevorzugt ist lediglich eine Drehung um um ein geringes Maß, insbesondere maximal 10°, bevorzugter maximal 5° oder maximal 3° um die Zahnlängsachse möglich. Die Zahnlängsachse ist vorzugsweise radial zur Längsachse des Getriebes oder radial zum Getriebe ausgerichtet. Eine eingeschränkte rotative Lagerung bezüglich der Zahnlängsachse bietet den Vorteil, dass sich die Zähne für eine möglichst geringe Reibung der Flanken der Verzahnungen und der Zähne ausrichten können. Weitere Ausführungsformen umfassen Auflageelemente, in welchen jeweils zumindest zwei Zähne aufgenommen sind. Die zwei Zähne sind typischerweise hintereinander in Längsrichtung des Getriebes angeordnet. So wird eine fixierte Lagerung mit einfachen Mitteln erreicht. Der Antrieb durch die Kurvenscheiben erfolgt vorzugsweise über die Auflageelemente.

Bei typischen Ausführungsformen besteht zwischen der Verzahnung der Stange und den in dem Zahnträger angeordneten Zähnen eine Steigung. Eine solche Steigung kann bei Ausführungsformen dadurch realisiert sein, dass die Verzahnung der Stange mit einer Steigung ausgeführt ist. Bei weiteren Ausführungsformen sind die Zähne in dem Zahnträger in Umlaufrichtung mit einer Steigung angeordnet. Damit wird erreicht, dass sich die Zähne in dem Zahnträger bezüglich der Längsachse "hochschrauben". Ausführungsformen umfassen eine Stange mit einer Verzahnung ohne Steigung oder mit im wesentlichen keiner Steigung. Dies bietet den Vorteil eines einfachen Aufbaus. Vorzugsweise sind die Zähne in dem Zahnträger steigungslos angeordnet. Bei Ausführungsformen weist die Verzahnung der Stange vorzugsweise eine Steigung auf. Vorzugsweise entspricht die Steigung der Anzahl der Erhebungen der Kurvenscheibe der Antriebseinrichtung.

Bei Ausführungsformen, bei welchen die Verzahnung der Stange eine Steigung aufweist, kann die Stange als Gewindestange ausgebildet sein. Bei Ausführungsformen mit einer Stange in Form einer Gewindestange ist die Verzahnung der Stange typischerweise facettiert ausgeführt oder die Zähne weisen eine negative oder positive Breitenballigkeit auf. Bei einem Getriebe mit einer außen liegenden Innenkurvenscheibe sind die Zähne vorzugsweise mit einer negativen Breitenballigkeit ausgeführt. Eine negative Breitenballigkeit bedeutet dabei vorzugsweise, dass die Zähne zumindest teilweise an ihren Zahnflanken konkav ausgebildet sind.

Vorzugsweise sind die Zähne in dem Zahnträger angeordnet, sodass die Zahnflanken oder die Zahnköpfe zumindest teilweise senkrecht zu der Längsrichtung ausgerichtet sind. Bei typischen Ausführungsformen sind die Zahnflanken oder Zahnköpfe in einem Winkel von höchstens 45°, bevorzugter höchstens 20°, noch bevorzugter höchstens 10° oder 5° bezüglich der Umlaufrichtung um die Längsachse ausgerichtet. Die Zähne sind vorzugsweise mit ihren Zahnköpfen oder Zahnflanken entsprechend dem Winkel der Steigung der Verzahnung der Stange gegenüber der Umfangsrichtung verdreht. Weitere typische Ausführungsformen weisen eine Verzahnung der Stange auf, welche Einzelzähne umfasst, welche mit einer treppenförmigen Steigung in Umlaufrichtung der Zahnstange angeordnet sind. Dabei stehen die Einzelzähne in Längsrichtung der Stange in Reihen hintereinander. Im Betrieb fahren die radial beweglichen Zähne jeweils entlang genau einer in Längsrichtung ausgerichteten Reihe der Einzelzähne die Stange entlang. Eine solche Verzahnung bietet den Vorteil, dass sie geometrisch einer Zahnstange entsprechen kann. Bei Ausführungsformen sind eine oder mehrere Einzelzahnreihen an der Stange angeordnet. Vorzugsweise sind die Einzelzahnreihen mit hohlballigen Zähnen des Zahnträgers in Eingriff. Die Stange kann bei Ausführungsformen auch mehrteilig ausgeführt sein. Dies bietet besonders dann Vorteile, wenn die Verzahnungen der Stange nach innen weist. In diesem Fall können mehrere außen liegende Zahnstangen die Stange bilden. Bei weiteren Ausführungsformen bilden mehrere innen liegende Zahnstangen die Stange.

Typische Ausführungsformen umfassen eine hohle Stange. Dies ermöglicht beispielsweise die Durchführung einer Welle für andere Anwendungen. Bei Ausführungsformen ist die Verzahnung der Stange als Innenverzahnung ausgebildet. Dies ermöglicht eine Anordnung des Zahnträgers innerhalb der Stange, wobei die Antriebseinrichtung oder Kurvenscheibe innerhalb des Zahnträgers angeordnet ist. Auf diese Weise wird ein besonders einfacher Antrieb der innen liegenden Antriebseinrichtung beispielsweise durch Anschluss an eine Antriebswelle ermöglicht. Die in dem Zahnträger gelagerten Zähne werden bei solchen Ausführungsformen durch die Antriebseinrichtung von innen nach außen getrieben.

Bei weiteren Ausführungsformen ist die Stange innerhalb des Zahnträgers angeordnet. Die Antriebseinrichtung ist dabei vorzugsweise außerhalb des Zahnträgers, insbesondere konzentrisch um den Zahnträger herum angeordnet. Bevorzugte Ausführungsformen umfassen mindestens eine Innenkurvenscheibe. Die Innenkurvenscheibe ist vorzugsweise ringförmig um den Zahnträger angeordnet. Die Zähne werden von der Innenkurvenscheibe vorzugsweise nach innen getrieben. Zwischen der Kurvenscheibe und den Zähnen sind vorzugsweise Rollenlager, Nadelrollenlager oder Gleitlager angeordnet, welche eine Verdrehung der sich drehenden Kurvenscheibe gegenüber den rotativ feststehend gelagerten Zähnen erlaubt, allerdings eine Kraftübertragung in radialer Richtung zwischen der Kurvenscheibe und den Zähnen ermöglicht. Weiterhin sind vorzugsweise zusätzlich Auflageelemente zur Aufnahme und Abstützung der Zähne zwischen den Zähnen und der Kurvenscheibe, insbesondere der Lagerung, angeordnet. Ausführungsformen mit außen liegender Antriebseinrichtung, insbesondere mit außen liegender Innenkurvenscheibe bieten den Vorteil, dass die Lagerung zwischen der Antriebseinrichtung und den Zähnen ausreichend Platz aufweist, um auch große Kräfte der Zähne in radialer Richtung übertragen zu können.

Ein weiterer Aspekt der Erfindung betrifft einen Antrieb mit einem Getriebe in einer der oben beschriebenen Ausführungsformen mit einem Motor, welcher die Antriebseinrichtung antreibt.

Ein weiterer Aspekt betrifft die Verwendung eines Getriebes in einer der beschriebenen Ausführungsformen zum Umsetzen einer Rotationsbewegung in eine Linearbewegung oder umgekehrt. Bei typischen Verwendungen von Ausführungsformen bilden der Zahnträger und die Stange jeweils das Linearabtriebselement oder das Widerlager. Der besondere Vorteil der Erfindung ist, dass der Kraftfluss von der Stange zu dem Zahnträger kurz ist und keine Drehlager für eine Übertragung der Axialkraft oder Linearkraft benötigt werden.

### Kurze Beschreibung der Zeichnungen

Nachfolgend werden Ausführungsbeispiele der Erfindung anhand der beiliegenden Zeichnungen näher erläutert, wobei die Zeichnungen zeigen:
- Fig. 1: zeigt in einer schematischen Seitenansicht eine Ausführungsform;
- Fig. 2: zeigt einen Schnitt durch die Ausführungsform der Fig. 1;
- Fig. 3: zeigt einen Ausschnitt eines Schnitts durch eine Ausführungsform, welcher der Ausführungsform der Figuren 1 und 2 ähnlich ist;
- Fig. 4: zeigt einen Zahn der Ausführungsformen der Fig. 1 bis 3;
- Fig. 5: zeigt in einer schematischen Seitenansicht einen weiteren Stab weiterer Ausführungsformen; und
- Fig. 6: zeigt in einer geschnittenen Teilansicht schematisch eine weitere Ausführungsform.

### Beschreibung von Ausführungsformen

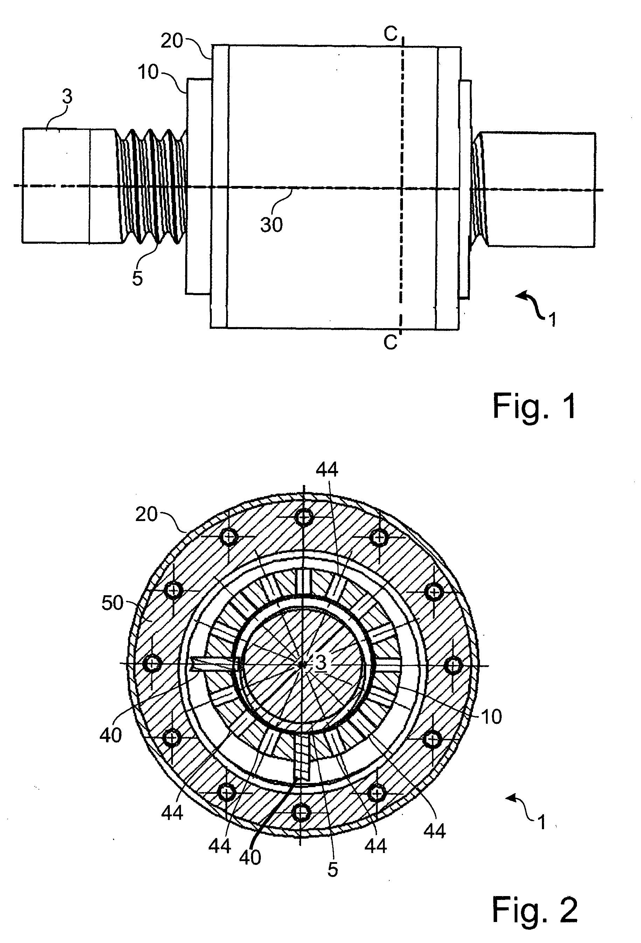

In der Fig. 1 ist in einer schematischen Seitenansicht ein Getriebe 1 zum Umsetzen einer Rotationsbewegung in eine Linearbewegung oder umgekehrt gezeigt. Das Getriebe 1 umfasst eine innen liegende Stange 3, welche in einem mittleren Bereich eine Verzahnung 5 aufweist. Die Verzahnung 5 der Stange 3 der Fig. 1 ist identisch zu der Verzahnung einer Gewindestange, wobei allerdings die Verzahnung 5 der Stange 3 nicht als Gewinde verwendet wird. Die Stange 3 ist in ihrem Rotationsfreiheitsgrad gesperrt, das heißt sie ist unverdrehbar gelagert.

Das Ausführungsbeispiel der Fig. 1 umfasst weiterhin einen Zahnträger 10, welcher konzentrisch zu der Stange 3 angeordnet ist. Der Zahnträger 10 wird wiederum ummantelt von einer Antriebsmanschette 20, welche ebenfalls konzentrisch zu der Stange 3 angeordnet ist. Die Antriebsmanschette 20 ist drehbar gelagert, der Zahnträger 10 ist hingegen in seinem Rotationsfreiheitsgrad gesperrt, das heißt er verdreht sich gegenüber der Stange 3 nicht. Bei einer Drehung der Antriebsmanschette 20 wird die Stange 3 gegenüber dem Zahnträger 10 linear in Richtung einer Längsachse 30 des Getriebes 1 verschoben. Es ist möglich, den Zahnträger 10 ortsfest zu lagern, die Antriebsmanschette 20 zu drehen und an der Stange 3 eine Linearbewegung oder einen Vorschub abzugreifen. Der besondere Vorteil gegenüber anderen vergleichbaren Getrieben für einen Linearvorschub ist, dass der Zahnträger 10 und die Stange 3 nicht rotativ gelagert werden müssen, sodass bei kompakten Abmessungen des Getriebes 1 eine hohe Vorschubkraft und eine hohe Steifigkeit des Getriebes erreicht werden können.

In der Fig. 2 ist der Schnitt C-C der Fig. 1 gezeigt. Die schematische Schnittansicht der Fig. 2 zeigt teilweise gleiche Teile wie die Fig. 1. Allgemein werden im Rahmen der Beschreibung von Ausführungsbeispielen gleiche oder ähnliche Teile mit gleichen Bezugszeichen bezeichnet und nicht alle noch einmal ausführlich erläutert.

Innen liegend des Getriebes 1 ist die Stange 3 mit der Verzahnung 5 angeordnet. Zur besseren Übersichtlichkeit der Darstellung sind lediglich zwei Zähne 40 dargestellt, welche in Öffnungen 44 des Zahnträgers 10 aufgenommen sind. Im Regelfall sind sämtliche 16 Öffnungen 44 des im Schnitt gezeigten Zahnkreises des Zahnträgers 10 mit Zähnen 40 besetzt. Es ist jedoch auch bei Ausführungsformen möglich, nicht alle Öffnungen 44 mit Zähnen 40 zu besetzen, insbesondere bei Verwendung einer Gleitlagerung zwischen einem Antrieb und den Zähnen 40. Bevorzugt werden alle Öffnungen 44 mit Zähnen 40 besetzt, um beispielweise eine Lagerung mit Nadellagern zu erleichtern oder zu ermöglichen.

Die Zähne 40 sind radial verschiebbar in den Öffnungen 44 des Zahnträgers 10 aufgenommen. Die Öffnungen 44 des Zahnträgers 10 sind durchgehend in radialer Richtung. Die Zähne 40 werden durch eine Kurvenscheibe 50 radial nach innen getrieben. Die Kurvenscheibe 50 ist als Innenkurvenscheibe ausgebildet und weist über ihren Umfang eine Erhebung auf, sodass bei einer Umdrehung der Kurvenscheibe 50 jeder der Zähne 40 genau einmal radial nach innen getrieben wird.

Die Verzahnung 5 der Stange 3 weist ebenfalls eine Steigung von Eins auf, sodass bei einer Drehung der Kurvenscheibe 50 die Zähne 40 entlang des Umfangs fortlaufend entsprechend der Steigung der Verzahnung 5 radial nach innen getrieben werden, sodass die Stange 3 linear bewegt wird. Die Zähne 40 sind um ihre eigene Zahnlängsachse, welche der radialen Richtung bezüglich der Längsachse 30 des Getriebes 1 entspricht, drehbar in den kreisrunden Öffnungen 44 aufgenommen. Die Zahnköpfe der Zähne 40 richten sich entsprechend der Steigung der Verzahnung 5 der Stange 1 aus, sodass die Zahnköpfe gegenüber eine Umfangsrichtung der Stange 3 beziehungsweise des Getriebes 1 leicht verdreht sind, wobei die Verdrehung weniger als 10° beträgt.

In der Fig. 2 sind nicht alle Zähne 40 gezeigt und außerdem ist nicht die Lagerung der Zähne 40 an der Kurvenscheibe 50 gezeigt. Allerdings ist in der Fig. 2 erkennbar, dass durch den konzentrischen Innenkreis der Kurvenscheibe 50 die Zähne 40 dort radial nach innen getrieben werden, wo wieder Platz durch die linear fortschreitende Verzahnung 5 der Stange 3 gelassen wird. Wird die Stange durch einen bestimmten Zahn 40 gerade nicht angetrieben, das heißt der Zahn 40 wird gerade nicht durch die Kurvenscheibe 50 radial nach innen getrieben, so treibt die Verzahnung 5 der Stange 3 den Zahn 40 wieder radial nach außen, bis der Innenradius der Kurvenscheibe 50 sich wieder verringert und so den Zahn 40 wieder nach innen treibt. Zwischen dem nach außen Treiben und dem nach innen Treiben eines Zahnes 40 durchläuft der Zahn 40 einen Totpunkt. Dies ist allerdings angesichts der Mehrzahl von Zähnen 40 unschädlich.

Der Antrieb des Getriebes 1 erfolgt über die Antriebsmanschette 20, welche drehfest mit der Kurvenscheibe 50 verbunden ist. Die Kurvenscheibe 50 und die Antriebsmanschette 20 sind zusammen drehbar gelagert.

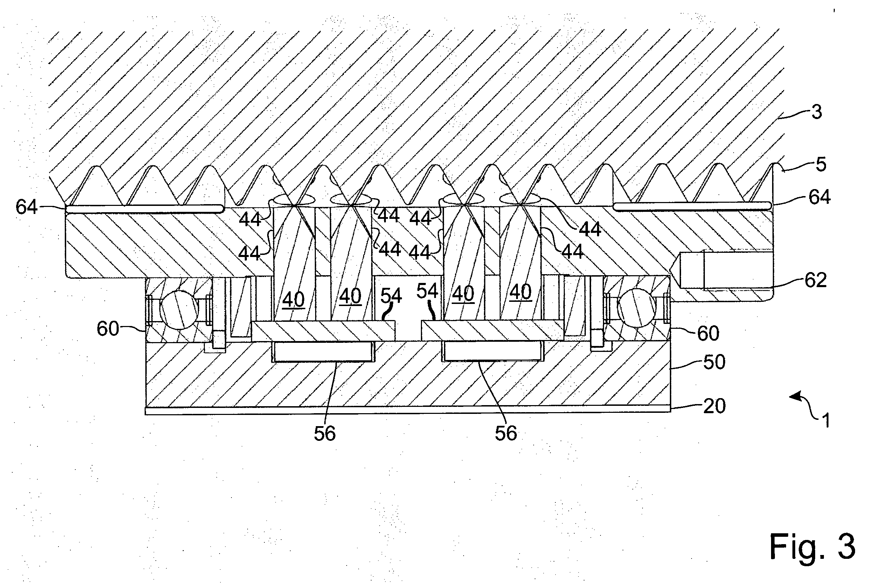

In der Fig. 3 ist eine teilweise Schnittansicht entlang der Längsachse eines Getriebes gezeigt, wobei die Ausführungsform der Fig. 3 in vielen Merkmalen der Ausführungsform der Figuren 1 und 2 entspricht. Wiederum werden für gleiche oder ähnliche Teile gleiche Bezugszeichen verwendet und diese Teile nicht alle noch einmal ausführlich beschrieben.

In dem Zahnträger 10 sind vier kreisförmig umlaufende Reihen von Öffnungen 44 angeordnet, in welchen Zähne 40 in vier Zahnkreisen aufgenommen sind. Die Zähne 40 greifen in die Verzahnung 5 der Stange 3 ein. Die Verzahnung 5 der Stange 3 und die Zähne 40 sind leicht schräg gegenüber der Schnittebene angeordnet, sodass auch Teile der Flanken der Zähne 40 und der Verzahnung 5 zu erkennen sind. In dem dargestellten Schnitt der Fig. 3 sind bei der dargestellten Stellung des Getriebes 1 die gezeigten Zähne 40 vollständig ausgezogen, sodass die Zahnköpfe der Zähne 40 auf den Köpfen der Verzahnung 5 angeordnet sind. Die gezeigten Zähne 40 befinden sich an einem Totpunkt. Andere Zähne, welche an anderen Stellen des Umfangs des Zahnträgers 10 angeordnet sind, sind nicht vollständig ausgezogen, sondern in anderen Positionen, beispielsweise auch vollständig bis zum Zahngrund der Verzahnung 5 eingefahren (unterer Totpunkt) oder im Eingriff mit einer Flanke.

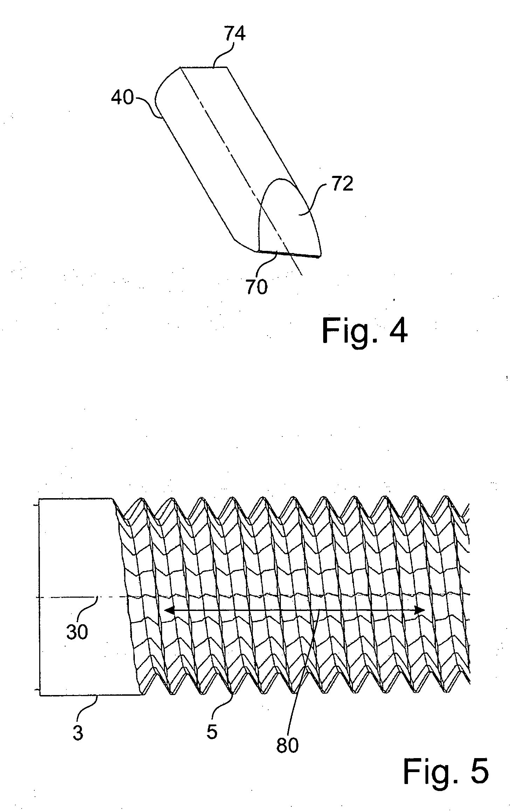

Die radiale Bewegung der Zähne 40 erfolgt für ein nach innen Treiben der Zähne 40 durch den Antrieb mit einer Kurvenscheibe 50. Die Kurvenscheibe 50 weist wie zuvor im Zusammenhang mit der Fig. 2 erläutert einen über den Umfang veränderlichen Innenradius auf. Die Zähne 40 sind jeweils zu Zweierpaketen zusammengefasst, wobei jeweils zwei in Längsrichtung 30 benachbarte Zähne 40 in einem Auflageelement 54 aufgenommen sind. Die Auflageelemente 54 sind mit Nadelrollen 56 in der Kurvenscheibe 50 gelagert. Die eine Kurvenscheibe 50 treibt zwei umlaufende Reihen von Auflageelementen 54 an, in welchen wiederum zwei Reihen von Zähnen 40 angeordnet sind. Das Lagern von zwei Zähnen 40 in einem Auflageelement 54 bietet den Vorteil, dass zum einen die Auflageelemente gegen Verdrehen gesichert sind sowie dass die Zähne 40 in einer definierten Lage bezüglich einer Drehung um eine radiale Richtung des Getriebes 1 fixiert sind. Hierfür weisen die Auflageelemente 54 typischerweise Ausnehmungen auf, in welche die entsprechend geformten Füße der Zähne 40 (Fig. 4, Abflachung 74) eingreifen.

Die Kurvenscheibe 50 ist zusammen mit der Antriebsmanschette 20 mit Kugellagern 60 auf dem Zahnträger 10 gelagert. Der Zahnträger 10 ist mit einem Sackloch 62 für eine ortsfeste Fixierung mittels Schrauben versehen. Der Zahnträger 10 ist ortsfest fixiert, wohingegen die Stange 3 lediglich gegen eine Rotation gesperrt ist und in Axialrichtung verschiebbar mit zwei Lagerbuchsen 64 gelagert ist. Allerdings ist auch bereits durch die mehreren Zahnkreise der Zähne 40 in Axialrichtung hintereinander bereits eine Lagerung der Stange 3 gegeben. Bei einem Antrieb des Getriebes 1 an der Antriebsmanschette 20 und einer entsprechenden Drehung der Kurvenscheibe 50 werden die Zähne 40 je nach Lage der Kurvenscheibe 50 und der Lage des betrachteten Zahns 40 durch die Kurvenscheibe 50 radial nach innen getrieben oder von der Verzahnung 5 radial nach außen getrieben, wobei im Ergebnis eine Linearbewegung der Stange 3 gegenüber dem Zahnträger 10 erfolgt.

Bei typischen Ausführungsformen ist die Stange mit einer Gleitlagerbuchse, auch als Lagerbuchse bezeichnet, in Axialrichtung verschiebbar gelagert. Die Lagerbuchse gleitet vorzugsweise ausschließlich auf den Zahnköpfen oder Zahnspitzen der Verzahnung der Stange. Dies ermöglicht einen einfachen Aufbau. Bei weiteren Ausführungsbeispielen ist die Stange an zumindest einem Ende gelagert. Dies bedingt eine längere Stange, um genug Platz für die Lagerung zu schaffen, kann aber für höhere Stabilität sorgen.

In der Fig. 4 ist ein einzelner Zahn 40 in einer schematischen, perspektivischen Ansicht gezeigt. Der Zahn 40 umfasst einen Zahnkopf 70, an welchen sich zwei jeweils konkav ausgebildeten Zahnflanken 72 anschließen. Die konkav ausgebildeten Zahnflanken 72 erlauben einen optimalen Eingriff der Zähne 40 in die Verzahnung 5 der Stangen 3 der Fig. 1 bis 3. Bei einem radialen Bewegen der Zähne 40 erscheint die Verzahnung 5 der Stangen 3 der Fig. 1 bis 3 konvex, sodass für einen einwandfreien Betrieb die Zähne 40 vorzugsweise mit konkaven Zahnflanken 72 ausgestattet sind. Bei einem Einbau der Zähne 40 in den Ausführungsformen der Fig. 1 bis 3 sind die Zahnköpfe 70 leicht gegenüber der Umfangsrichtung des Getriebes 1 verkippt, vorzugsweise weniger als 10° oder vorzugsweise weniger als 5°. Das Verkippen der Zahnköpfe 70 gegenüber der Umfangsrichtung beruht auf der Steigung der Verzahnung 5 der Stange 3. An dem dem Zahnkopf 70 gegenüberliegenden Ende des Zahns 40 weist dieser eine Abflachung 74 auf, welche eine verdrehsichere Aufnahme des Zahnes 40 in dem Auflageelement 54 (Fig. 3) ermöglicht.

In der Fig. 5 ist eine weitere Möglichkeit gezeigt, den geometrischen Besonderheiten von Getrieben gemäß dieser Anmeldung Rechnung zu tragen. Die Verzahnung 5 der Stange 3 der Ausführungsform der Fig. 5 ist facettiert ausgeführt. Durch die facettierte Ausführung der Verzahnung 5 ist es möglich, Zähne zu verwenden, welche gerade Zahnflanken aufweisen und nicht wie der Zahn der Fig. 4 eine negative Breitenballigkeit aufweisen. Die negative Breitenballigkeit entspricht einer konvexen Zahnflanke.

Entlang der Stange 3 ergeben sich mit der facettierten Verzahnung 5 einzelne Zahnreihen in Längsrichtung der Stange 3. Beispielhaft ist eine Zahnreihe mit einem Doppelpfeil 80 gekennzeichnet. Entlang der Zahnreihe des Doppelpfeils 80 bewegen sich bei einer Ausführungsform analog zu der Ausführungsform der Fig. 3 genau vier Zähne, welche in Längsrichtung hintereinander in dem Zahnträger 10 aufgenommen sind (Fig. 3). Zähne, welche in Umfangsrichtung benachbart zu diesen Zähnen in den Zahnträger 10 aufgenommen sind, bewegen sich entlang einer benachbarten Zahnreihe der Stange 3.

Aufgrund der Tatsache, dass sich Zähne, welche in dem Zahnträger aufgenommen sind, stets entlang einer bestimmten Längsrichtung an der Stange 3 entlang bewegen, beziehungsweise die Stange 3 entsprechend bewegt wird, können auch einzelne, voneinander getrennte, Zahnreihen an der Stange 3 vorgesehen werden. Weitere Ausführungsformen weisen mehrteilige Stangen 3 auf, wobei einzelne Teile der Stange 3 jeweils eine oder mehrere Zahnreihen aufweisen können.

Die im Zusammenhang mit den Fig. 1 bis 3 und 5 angesprochenen Ausführungsformen weisen eine in der Mitte liegende Stange 3 auf, wobei Zähne durch eine außen liegende Innenkurvenscheibe radial nach innen getrieben werden. Weitere Ausführungsformen weisen eine innen liegende Kurvenscheibe auf, welche Zähne radial nach außen treibt. Die Stange ist bei solchen Ausführungsformen hohl mit einer Innenverzahnung ausgeführt.

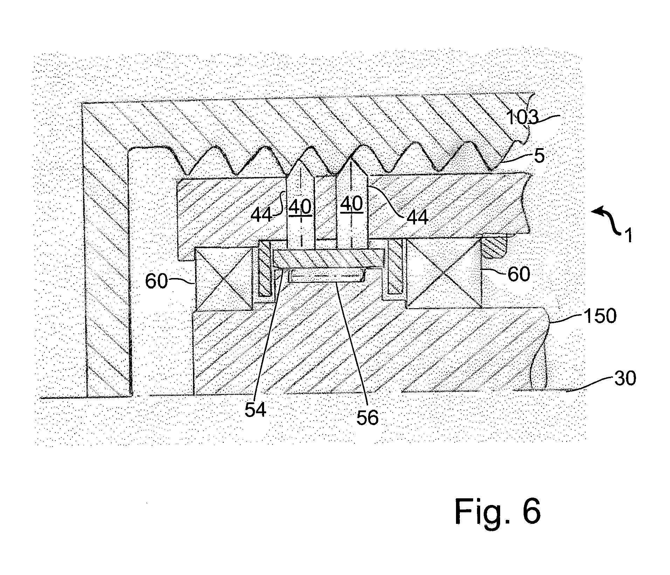

In der Fig. 6 ist in einer Schnittansicht ein Ausschnitt oder eine Hälfte einer Ausführungsform gezeigt. In der Schnittansicht der Fig. 6 ist lediglich eine Hälfte bezüglich der Längsachse 30 des Getriebes 1 der Fig. 6 gezeigt.

Das Getriebe 1 der Fig. 6 ist geeignet, eine Rotationsbewegung in eine Linearbewegung umzuwandeln. Das Getriebe 1 der Fig. 6 umfasst eine innen liegende Kurvenscheibe 150, welche einstückig zu einer Welle weitergebildet ist. Die Kurvenscheibe 150 ist drehbar mittels Kugellagern 60 gelagert. Ein Zahnträger 10 ist feststehend gelagert, sodass er weder verdrehbar noch verschiebbar ist. Die Kurvenscheibe 150 ist mit den Kugellagern 60 gegenüber dem Zahnträger 10 drehbar gelagert.

Die Kurvenscheibe 150 dient dazu, Zähne 40 radial nach außen zu treiben. Wenn die Zähne 40 radial bezüglich der Längsachse 30 nach außen getrieben werden, greifen sie in eine Verzahnung 5, welche als Innenverzahnung ausgebildet ist, einer Stange 103 ein, die bei dem Ausführungsbeispiel der Fig. 6 hohl ausgebildet ist. Beim Betrieb des Getriebes 1 der Fig. 6 wird die hohle Stange 103 mit der Innenverzahnung 5 gegenüber dem feststehenden Zahnträger 10 linear, das heißt in der Schnittzeichnung der Fig. 6 nach rechts oder nach links, verschoben. Auch ist ein Betrieb in die entgegengesetzte Richtung möglich, das heißt, dass bei einem Antrieb in Form eines Linearverschubs der Stange 103 die Kurvenscheibe 150 mit der einstückig ausgebildeten Welle rotiert wird. Die Zähne 40 des Ausführungsbeispiels der Fig. 6 sind konvex und die Flanken der Verzahnung der hohlen Stange 103 sind konkav ausgeführt.

Ein Vorteil der Ausführungsform der Fig. 6 ist, dass ein Anflanschen eines Motors an die Kurvenscheibe 150 einfach ist. Auf diese Weise lässt sich ein kompaktes Getriebe bereitstellen. Die Zähne 40 sind wiederum in Auflageelementen 54 aufgenommen, wobei jeweils zwei Zähne 40 in einem Auflageelement 54 aufgenommen sind. Die Auflageelemente 54 sind mit Nadelrollen 56 auf der Kurvenscheibe 150 gelagert. Im Übrigen ist die Ausführungsform der Fig. 6 analog zu den Ausführungsformen der Fig. 1 bis 3.

Weitere Ausführungsformen können mehr als zwei Zähne pro Auflageelement in einer Reihe in Längsrichtung umfassen. Ebenso ist es möglich, Ausführungsformen zu verwirklichen, welche nicht paarweise sondern einzeln gelagerte Zähne umfassen. Die Auflageelemente sind bei typischen Ausführungsformen für jeweils zwei Zähne einzeln ausgeführt. Weitere Ausführungsformen umfassen ein umlaufendes Auflageelement, welches biegsam ist, soweit, dass es sich der drehenden Kurvenscheibe anpassen kann. Solche alternativen Lagermöglichkeiten sind sowohl für innen liegende Kurvenscheiben als auch für außen liegende Kurvenscheiben (Innenkurvenscheiben) möglich. Bei typischen Ausführungsformen wird das Auflageelement auf Nadelrollen gelagert. Weitere Ausführungsformen umfassen eine Gleitreibung zur Lagerung der Auflageelemente. Weitere Ausführungsformen weisen eine direkte Gleitlagerung der Zähne auf.

## Patentansprüche

1. Getriebe (1) zum Umsetzen einer Rotationsbewegung um eine Längsachse (30) des Getriebes in eine Linearbewegung in Richtung der Längsachse (30) oder umgekehrt, mit
- einer Stange (3, 103) mit einer Verzahnung (5), **gekennzeichnet durch**
- einen Zahnträger (10), in welchem Zähne (40) für einen Eingriff mit der Verzahnung (5) radial beweglich aufgenommen sind,
- wobei die Stange (3, 103) und der Zahnträger (10) relativ zueinander drehfest und relativ zueinander in Richtung der Längsachse linear verschieblich gelagert sind.

2. Getriebe (1) nach Anspruch 1, **gekennzeichnet durch** eine Antriebseinrichtung (50, 150) zum radialen Antrieb der Zähne (40).

3. Getriebe (1) nach Anspruch 1, **gekennzeichnet durch** eine um die Längsachse (30) des Getriebes rotativ gelagerte Kurvenscheibe (50, 150) zum radialen Antrieb der Zähne (40).

4. Getriebe (1) nach Anspruch 3, **dadurch gekennzeichnet, dass** die Kurvenscheibe (50, 150) die Zähne (40) so antreibt und die Verzahnung (5) derart ausgebildet ist, dass bei einer Drehung der Kurvenscheibe (50, 150) die Stange (3, 103) gegenüber dem Zahnträger (10) linear verschoben wird.

5. Getriebe (1) nach einem der vorhergehenden Ansprüche, **dadurch gekennzeichnet, dass** zwischen der Verzahnung der Stange und den in dem Zahnträger angeordneten Zähnen eine Steigung vorgesehen ist.

6. Getriebe (1) nach einem der vorhergehenden Ansprüche, **dadurch gekennzeichnet, dass** die Zähne (40) um eine radiale Richtung in Bezug auf die Längsachse (30) verdreht angeordnet sind.

7. Getriebe (1) nach einem der vorhergehenden Ansprüche, **dadurch gekennzeichnet, dass** die Verzahnung (5) der Stange (3, 103) facettiert ausgebildet ist.

8. Getriebe (1) nach einem der vorhergehenden Ansprüche, **dadurch gekennzeichnet, dass** die Zähne (40) eine negative Breitenballigkeit aufweisen.

9. Getriebe (1) nach einem der vorhergehenden Ansprüche, **dadurch gekennzeichnet, dass** die Stange (103) hohl ausgebildet ist.

10. Getriebe (1) nach Anspruch 9, **dadurch gekennzeichnet, dass** die Verzahnung (5) als Innenverzahnung ausgebildet ist.

11. Getriebe (1) nach einem der Ansprüche 1 bis 8, **dadurch gekennzeichnet, dass** die Stange (3) innerhalb des Zahnträgers (10) angeordnet ist.

12. Getriebe (1) nach Anspruch 11 mit Rückbezug auf Anspruch 3, **dadurch gekennzeichnet, dass** die Kurvenscheibe (50) als Innenkurvenscheibe ausgebildet ist.

13. Antrieb mit einem Getriebe (1) nach einem der vorhergehenden Ansprüche 3 - 12 mit Rückbezug auf Anspruch 3 mit einem Motor, welcher die Kurvenscheibe (50, 150) antreibt.

14. Verwendung eines Getriebes nach einem der Ansprüche 1 bis 10 zum Umsetzen einer Rotationsbewegung in eine Linearbewegung.

15. Verwendung nach Anspruch 14, **dadurch gekennzeichnet, dass** der Zahnträger (10) und die Stange (3, 103) jeweils ein Linearabtriebselement oder ein Widerlager bilden.

## Claims

1. A gearbox (1) for converting rotary movement about a longitudinal axis (30) of the gearbox into linear movement in the direction of the longitudinal axis (30) or vice versa including
- a rod (3, 103) with gear teeth (5), **characterised by**
- a tooth carrier (10), in which teeth (40) for engagement with the gear teeth (5) are radially movably received,
- wherein the rod (3, 103) and the tooth carrier (10) are mounted rotationally fixedly relative to one another and linearly movably relative to one another in the direction of the longitudinal axis.

2. A gearbox (1) as claimed in claim 1, **characterised by** a drive device (50, 150) for radially driving the teeth (40).

3. A gearbox (1) as claimed in claim 1, **characterised by** a cam (50, 150) mounted to rotate about the longitudinal axis (30) of the gearbox for radially driving the teeth (40).

4. A gearbox (1) as claimed in claim 3, **characterised in that** the cam (50, 150) so drives the teeth (40) and the gear teeth (5) are so constructed that when the cam (50, 150) is rotated the rod (3, 103) is moved linearly with respect to the tooth carrier (10).

5. A gearbox (1) as claimed in one of the preceding claims, **characterised in that** provided between the gear teeth on the rod and the teeth arranged in the tooth carrier there is a lead.

6. A gearbox (1) as claimed in one of the preceding claims, **characterised in that** the teeth (40) are arranged rotationally offset about a radial direction with respect to the longitudinal axis (30).

7. A gearbox (1) as claimed in one of the preceding claims, **characterised in that** the gear teeth (5) on the rod (3, 103) are bevelled.

8. A gearbox (1) as claimed in one of the preceding claims, **characterised in that** the teeth (40) have a negative crowning.

9. A gearbox (1) as claimed in one of the preceding claims, **characterised in that** the rod (103) is of hollow construction.

10. A gearbox (1) as claimed in claim 9, **characterised in that** the gear teeth (5) are constructed in the form of internal gear teeth.

11. A gearbox (1) as claimed in one of claims 1 to 8, **characterised in that** the rod (3) is arranged within the tooth carrier (10).

12. A gearbox (1) as claimed in claim 11 when dependent on claim 3, **characterised in that** the cam (50) is constructed in the form of an internal cam.

13. A drive including a gearbox (1) as claimed in one of the proceeding claims 3 to 12 when dependent on claim 3 with a motor which drives the cam (50, 150).

14. Use of a gearbox as claimed in one of claims 1 to 10 for converting rotary movement into linear movement.

15. Use as claimed in claim 14, **characterised in that** the tooth carrier (10) and the rod (3, 103) each constitute a linear driven element or a bearing.

## Revendications

1. Engrenage (1) pour convertir un mouvement de rotation autour d'un axe longitudinal (30) de l'engrenage en un mouvement linéaire en direction de l'axe longitudinal (30), ou vice-versa, avec
- une tige (3, 103) avec une denture (5),
caractérisé pair
- un porte-dents (10) dans lequel sont reçues de marnière mobile radicalement des dents (40) destinées à venir en prise avec la denture (5),
- la tige (3, 103) et le porte-dents (10) étant montés immobiles en rotation l'un par rapport à l'autre et déplaçables linéairement l'un par rapport à l'autre en direction de l'axe longitudinal.

2. Engrenage (1) selon la revendication 1, **caractérisé par** un moyen d'entraînement (50, 150) destiné à entrainer radialement les dents (40).

3. Engrenage (1) selon la revendication 1, **caractérisé par** un disque à cames (50, 150) monté de manière rotative autour de l'axe longitudinal (30) de l'engrenage, destiné à l'entraînement radial de la denture (40).

4. Engrenage (1) selon la revendication 3, **caractérisé par le fait que** le disque à cames (50, 150) entraîne les dents (40) et que la denture (5) est réalisée de sorte que, en cas de rotation du disque à cames (50, 150), la tige (3, 103) soit déplacée linéairement par rapport au porte-dents (10).

5. Engrenage (1) selon l'une des revendications précédentes, **caractérisé par le fait qu'**entre les dents de la tige et les dents disposées dans le porte-dents est prévue une pente.

6. Engrenage (1) selon l'une des revendications précédentes, **caractérisé par le fait que** les dents (40) sont disposées décalées d'une direction radiale par rapport à l'axe longitudinal (30).

7. Engrenage (1) selon l'une des revendications précédentes, **caractérisé par le fait que** la denture (5) de la tige (3, 103) est réalisée à facettes.

8. Engrenage (1) selon l'une des revendications précédentes, **caractérisé par le fait que** les dents (40) présentant un bombement négatif.

9. Engrenage (1) selon l'une des revendications précédentes, **caractérisé par le fait que** la tige (103) est réalisée creuse.

10. Engrenage (1) selon la revendication 9, **caractérisé par le fait que** la denture (5) est réalisée sous forme de denture intérieure.

11. Engrenage (1) selon l'une des revendications 1 à 8, **caractérisé par le fait que** la tige (3) est disposée dans le porte-dents (10).

12. Engrenage (1) selon la revendication 11 en rapport avec la revendication 3, **caractérisé par le fait que** le disque à cames (50) est réalisé sous forme de disque à cames intérieur.

13. Entraînement avec un engrenage (1) selon l'une des revendications précédentes 3 à 12 en rapport avec la revendication 3, avec un moteur qui entraîne le disque à cames (50, 150).

14. Utilisation d'un engrenage selon l'une des revendications 1 à 10 pour convertir un mouvement de rotation en un mouvement linéaire.

15. Utilisation selon la revendication 14, **caractérisée par le fait que** le porte-dents (10) et la tige (3, 103) constituent respectivement un élément de sortie linéaire ou une butée.
